# EUROPÄISCHE PATENTSCHRIFT

(11) **EP 3 640 537 B1**
(45) Veröffentlichungstag und Bekanntmachung des Hinweises auf die Patenterteilung: **03.11.2021**
(21) Anmeldenummer: 19198846.8
(22) Anmeldetag: 23.09.2019
(51) Int. Cl.: F22B 1/28

(54) **VERDAMPFEREINRICHTUNG UND ELEKTROGERÄT MIT EINER VERDAMPFEREINRICHTUNG**
EVAPORATOR DEVICE AND ELECTRIC APPLIANCE COMPRISING AN EVAPORATOR DEVICE
DISPOSITIF ÉVAPORATEUR ET APPAREIL ÉLECTRIQUE DOTÉ D'UN DISPOSITIF ÉVAPORATEUR

(30) Priorität: 15.10.2018 DE 102018217645
(43) Veröffentlichungstag der Anmeldung: 22.04.2020
(73) Patentinhaber: E.G.O. Elektro-Gerätebau GmbH, 75038 Oberderdingen (DE)
(72) Erfinder: Albert, Tobias, 76703 Kraichtal (DE); Block, Volker, 75015 Bretten (DE); Eigl, Sebastian, 75015 Bretten (DE); Mühlnikel, Roland, 75015 Bretten (DE); Schönemann, Konrad, 75056 Sulzfeld (DE); Tafferner, Michael, 76316 Malsch (DE)
(74) Vertreter: Patentanwälte Ruff, Wilhelm, Beier, Dauster & Partner mbB

(56) Entgegenhaltungen:
- EP-A1- 3 225 139
- DE-A1-102005 012 219
- US-B1- 6 169 852

## Beschreibung

Die Erfindung betrifft eine Verdampfereinrichtung für Wasser, die einen Behälter aufweist. In diesem befindet sich Wasser, das von einem Heizelement aufgeheizt wird und als Dampf austritt. Dieser Dampf kann für verschiedene Zwecke genutzt werden, insbesondere für ein Elektrogerät als Dampfgargerät. Ein Elektrogerät mit einer solchen Verdampfereinrichtung ist ebenfalls Gegenstand der Erfindung.

Aus der EP 3088800 A1 ist eine gattungsgemäße Verdampfereinrichtung bekannt für ein Dampfgargerät. Sie weist einen Behälter in Form eines aufrechtstehenden runden Rohrs auf, an dem außen Heizelemente in drei separaten Heizkreisen angeordnet sind. Die eingesetzte Heizleistung kann sehr hoch sein, um möglichst viel Dampf erzeugen zu können. Dieser Dampf tritt dann oben aus dem Behälter aus.

Aus der EP 3225139 A1 ist eine weitere gattungsgemäße Verdampfereinrichtung bekannt, wie sie in einem Dampfgargerät verwendet werden kann. Ein Behälter in Form eines aufrecht stehenden runden Rohrs ist mittels einer Innentrennwand in einen inneren und in einen äußeren Bereich unterteilt, der den inneren Bereich konzentrisch umgibt. An der Außenseite des Behälters ist eine flächige Heizeinrichtung angebracht. Nach oben zu geht der Behälter in einen Deckel über, der konisch nach oben oder nach unten zulaufend ausgebildet sein kann. Von dem Deckel wiederum geht ein Dampfkanal ab, der den entstandenen Dampf führt.

Aus der US 6,169,852 B1 ist eine weitere Verdampfereinrichtung bekannt, mit der möglichst schnell Dampf erzeugt werden soll. Ein Behälter zur Dampferzeugung ist vorgesehen, der nach oben mit einem Deckel geschlossen ist. In dem Behälter ist ein poröser Körper als eine Art Aufnahme für Glasfasern vorgesehen. Es können aber auch andere Fasern, insbesondere auch mineralische oder organische Fasern, verwendet werden.

Aus der DE 10 2005 012 219 A1 ist eine Verdampfereinrichtung bekannt in Form eines länglichen Rohrs und einer dicken Rohrwandung. Darin verlaufen parallel zur Längsrichtung des Rohrs Bohrungen, in die eine Heizeinrichtung eingeführt sein kann, beispielsweise in Form einer Heizpatrone.

Der Erfindung liegt die Aufgabe zugrunde, eine eingangs genannte Verdampfereinrichtung für Wasser und ein entsprechendes Elektrogerät zu schaffen, mit denen Probleme des Standes der Technik gelöst werden können und es insbesondere möglich ist, Wasser schnell und effizient aufzuheizen bzw. zum Verdampfen zu bringen und diesen Dampf in einem Elektrogerät zu nutzen.

Gelöst wird diese Aufgabe durch eine Verdampfereinrichtung mit den Merkmalen des Anspruchs 1 sowie durch ein Elektrogerät mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für eine Verdampfereinrichtung oder nur für ein damit versehenes Elektrogerät erläutert. Sie sollen jedoch unabhängig davon sowohl für eine Verdampfereinrichtung als auch für ein entsprechendes Elektrogerät selbständig und unabhängig voneinander gelten können. Der Wortlaut der Ansprüche wird durch ausdrückliche Bezugnahme zum Inhalt der Beschreibung gemacht.

Die Verdampfereinrichtung, mit der Wasser verdampft werden soll, weist einen Behälter für das Wasser und mindestens ein Heizelement auf. Der Behälter ist bis auf einen Wassereinlass und einen Dampfauslass geschlossen, vorzugsweise gibt es jeweils nur einen einzigen Wassereinlass und/oder einen einzigen Dampfauslass. Das mindestens eine Heizelement ist außen am Behälter angeordnet, vorteilhaft sind sämtliche Heizelemente außen am Behälter angeordnet. Im Behälter kann dann das Wasser erhitzt bzw. verdampft werden, ohne dass Wasser an ein Heizelement direkt gelangen kann. So sind Probleme mit elektrischer Isolation geringer.

Erfindungsgemäß ist innen im Behälter ein Innenkörper angeordnet, der vorteilhaft zumindest teilweise, besonders vorteilhaft vollständig, im Betrieb zur Dampferzeugung von Wasser umgeben ist. Der Innenkörper ist weitgehend von der Innenseite des Behälters beabstandet bzw. berührt diesen nicht. Vorteilhaft weist er an mindestens 80 % seiner Außenfläche, die zu dem Heizelement hinweist, einen Abstand zu dem Behälter bzw. einer Innenseite des Behälters auf. Dadurch wird erreicht, dass hier ein zumindest schmaler Zwischenraum oder Kanal für Wasser vorgesehen ist, welches erhitzt und verdampft werden kann, ohne dass das Heizelement durch eine Mantelwand des Behälters den an der Innenseite direkt anliegenden Innenkörper direkt beheizt, was einen zu großen Wärmeabfluss bedeuten würde. Dieser fehlt dann für ein Verdampfen des Wassers. So kann erreicht werden, dass der Innenkörper möglichst wenig direkte Erwärmung durch das mindestens eine Heizelement erfährt. In Bereichen, in denen an einer Außenfläche des Behälters kein Heizelement vorgesehen ist, wie nachfolgend noch im Detail erläutert wird, kann der Innenkörper an der Innenseite des Behälters anliegen. Insbesondere sollte er ja stabil und positionsgenau gehaltert sein.

Der Innenkörper ist so ausgebildet, dass er für Dampf und für Wasser durchlässig ist. Es ist also kein reiner Verdrängungskörper. Dazu besteht er aus einem nicht-massiven und/oder aus einem porösen Material und/oder aus einem Gewebe-Material. Der Innenkörper ist also vorteilhaft nicht nur ein Körper oder ein Gebilde, welcher einige wenige Wasserdurchtritte aufweist, ansonsten aber über wesentliche Bereiche seiner Außenfläche wasserundurchlässig ist. Er weist sozusagen sehr viele Wasserdurchtritte auf bzw. ist von lauter Wasserdurchtritten durchzogen. Durch die erfindungsgemäße Durchlässigkeit für Dampf und Wasser mit der entsprechenden Ausbildung aus dem vorgenannten Material kann der Innenkörper sehr umfänglich und stark durchströmt werden, wodurch eine zu starke Bildung von Dampfblasen verhindert werden kann. Ebenso können ein zu starkes Aufwallen von Wasser bzw. zu starke Wasserbewegungen im Behälter, die aufgrund der Erwärmung und auch möglicherweise der Dampfblasenbildung entstehen, reduziert oder unterdrückt werden. In einem schmalen Bereich zwischen Innenkörper und Innenseite des Behälters dort, wo an der Außenseite ein Heizelement angeordnet ist, kann dann das Wasser durch intensiven Wärmeeintrag sehr schnell erwärmt werden. Dieser Abstand kann im Bereich weniger Millimeter liegen, beispielsweise zwischen 2 mm und 10 mm. Dieses relativ geringe Wasservolumen kann dann schnell durch das Heizelement aufgeheizt und zum Verdampfen gebracht werden. Da der Innenkörper gerade für Dampf und für Wasser durchlässig sein soll, findet natürlich ein gewisser Wärmeaustausch bzw. Wasseraustausch auch an der Innenseite der beheizten Behälterwand statt. Dieser ist jedoch durch den Innenkörper reduziert, was dann vorhersehbar die Verdampfungsrate steigert.

Der Innenkörper ist vorteilhaft zwar nicht massiv, alleine schon wegen der Wasserdurchtritte. Er ist aber sozusagen homogen ausgebildet, seine Struktur ist also durchgehend weitgehend oder vollständig gleich ausgebildet. Dies kann besonders vorteilhaft losgelöst von dem konkreten Material oder Aufbau sein.

In weiterer Ausgestaltung der Erfindung ist es von Vorteil, wenn der Wassereinlass im unteren Bereich des Behälters vorgesehen ist. Vorteilhaft ist er in einem untersten Bereich vorgesehen, was beispielsweise auch ein Ablassen von Wasser verbessern kann, wenn dieses durch den Wassereinlass abgelassen wird. So ist zusätzlich zum Befüllen ein Entleeren des Behälters besser möglich. Bevorzugt ist ein Wassereinlass an einem Behälterboden vorgesehen. Wenn dieser Behälterboden ein separates Teil ist, wie nachfolgend noch als Option erläutert wird, kann ein Wassereinlass auch leicht angeformt werden. Dies erleichtert die Herstellung der gesamten Verdampfereinrichtung.

In vorteilhafter Ausgestaltung der Erfindung ist der Behälter ein Rohr, insbesondere ein zylindrisches Rohr. Es kann ein rundzylindrisches Rohr sein, was möglichst einfach hergestellt werden kann und bearbeitet werden kann. Dadurch kann auch die Anzahl an Kanten, Vorsprüngen odgl. im Inneren des Behälters reduziert werden, an denen sich möglicherweise Temperaturspitzen ergeben oder die besonders einer Verkalkung ausgesetzt werden können. Auf ein derartiges Rohr kann ein Heizelement leicht mit bekannten Methoden aufgebracht werden, siehe die eingangs genannte EP 3088800 A1.

Vorteilhaft ist der Behälter der Verdampfereinrichtung derart angeordnet, insbesondere in einem mit der Verdampfereinrichtung versehenen Elektrogerät, beispielsweise als Dampfgarer, dass eine Rohrachse oder Längsmittelachse des Behälters senkrecht steht. So kann in vertikaler Richtung gesehen auch eine rundsymmetrische Verdampfereinrichtung geschaffen werden mit flächenmäßig und/oder volumenmäßig möglichst gleich verteilten Heizeigenschaften und Verdampfungseigenschaften.

Der Behälter kann aus Metall gefertigt sein, wodurch sowohl hohe mechanische Festigkeit als auch Temperaturbeständigkeit gegeben sind. Vorteilhaft kann ein Dickschichtstahl verwendet werden, der an seiner Außenseite auf bekannte Art und Weise mit einer Isolierung versehen ist, bevor das Heizelement aufgebracht wird. Insofern ist das Heizelement vorteilhaft ein sogenanntes Schichtheizelement bzw. flächig ausgedehnt und nicht nur ein einzelner schmaler Heizleiter oder Heizdraht. Besonders vorteilhaft ist das Heizelement ein Dickschichtheizelement mit mindestens einem Heizleiter, wobei der mindestens eine Heizleiter oder mehrere Heizleiter spiralig, mäanderförmig odgl. aufgebracht sein können, um eine bestimmte Fläche an der Außenseite des Behälters zu bedecken. Dies ist aber grundsätzlich aus dem Stand der Technik bekannt, siehe die eingangs genannte EP 3088800 A1.

Allgemein, gerade aber wenn der Behälter aus Metall gefertigt ist, kann am Behälter ein Bodenteil vorgesehen sein, das separat hergestellt ist. Er kann dann dichtend mit dem Behälter verbunden werden. So können auf einfache Art und Weise auch komplizierte Formen für den Behälter und/oder den Bodenteil vorgesehen sein. Insbesondere wenn der Wassereinlass am Behälterboden vorgesehen sein soll, kann er an diesem Bodenteil ausgebildet sein. Dies ist besonders vorteilhaft durch Kunststoffspritzguss leicht zu realisieren. Ähnlich wie dies von Pumpen odgl. bekannt ist, kann dann der Bodenteil dichtend mit einer Mantelwand des Behälters verbunden werden, selbst wenn diese auch aus Kunststoff bestehen würde. Dabei können Dichtungen bzw. Dichtringe vorgesehen sein.

Erfindungsgemäß ist ein Deckelteil des Behälters aus Kunststoff ausgebildet, besonders vorteilhaft wiederum als Teil aus Kunststoffspritzguss. Ein solcher Deckelteil kann oben mit der Mantelwand des Behälters verbunden sein mit denselben Aspekten wie zuvor zum Bodenteil beschrieben. Eine Verbindung kann dichtend sein, vorteilhaft mit zusätzlich eingelegter oder angespritzter Dichtung. Dadurch kann es ermöglicht werden, den Dampfauslass an dem Deckelteil anzuordnen bzw. daran auszubilden. Ein solcher Dampfauslass kann dann mit einem Winkel von nahezu 90° von einer Längsmittelachse des Behälters abgehen von dem Deckelteil. Der Winkel kann vorteilhaft zwischen 70° und 90° liegen. Dabei der Dampfauslass leicht nach oben über die Horizontale hinaus weisen, beispielsweise mit einem Winkel zwischen 2° und 15°. Vorteilhaft verläuft der Dampfauslass aber horizontal.

Für den Deckelteil kann vorgesehen sein, dass er einen unteren Rohrabschnitt aufweist bzw. im unteren Bereich rohrartig ausgebildet ist. Dieser Rohrabschnitt kann eine Verlängerung des Behälters bilden, den Behälter also nicht direkt an einer Oberkante oder an einem oberen Rand verschließen. Ein solcher Rohrabschnitt kann sich ein Stück über den oberen Rand des Rohrs hinaus erstrecken, beispielsweise 5 mm bis 30 mm. In diesem Rohrabschnitt kann der Dampfauslass vorgesehen sein, der seitlich von dem Deckelteil abgeht. Durch einen solchen seitlich abgehenden Dampfauslass ist es möglich, von den gebildeten Dampfblasen nach oben gerissenes Wasser als Spritzer nicht so leicht austreten zu lassen. So wird möglichst trockener Dampf am Dampfauslass gebildet.

Um Bodenteil und Deckelteil an dem Behälter und möglichst auch miteinander zu befestigen, kann vorgesehen sein, dass jeweils mindestens ein Befestigungsabschnitt davon absteht. Er kann vorteilhaft in einer Richtung senkrecht zur Längsachse des Behälters abstehen, also seitlich abstehen. Die beiden Befestigungsabschnitte werden dann miteinander verbunden, beispielsweise verschraubt, und aufeinander zugedrückt. So können sie mit dem Behälter zu einer Baueinheit verbunden werden, insbesondere dichtend zusammengepresst werden. Bevorzugt sind mehrere Befestigungsabschnitte an dem Deckelteil und an dem Bodenteil vorgesehen, besonders vorteilhaft jeweils gegenüberliegend.

Bei der Erfindung ist sind an einer Innenseite des Deckelteils Ablenkplatten vorgesehen. Diese können in der projizierten Verlängerung des Dampfauslasses in den Behälter hinein vorgesehen sein, so dass quasi die Verlängerung des Dampfauslasses in den Behälter hinein durch mehrere, vorteilhaft durch alle, dieser Ablenkmittel hindurchgeht. Dadurch entsteht ein längerer direkter Weg für spritzendes Wasser hin zum Dampfauslass und aus diesem heraus. Solches Wasser wird insbesondere mitgerissen durch austretenden Dampf. Ein Austritt des Wassers ist dadurch stark verringert oder gar nicht möglich. So kann zum einen das Wasser im Behälter gehalten werden, um noch besser verdampft zu werden. Des Weiteren kann trockenerer und somit vorteilhafter Dampf erzeugt werden, der dann in einem vorgenannten Elektrogerät besser verwendet werden kann.

In weiterer Ausgestaltung der Erfindung kann eine Halterung für den Innenkörper im Behälter vorgesehen sein, die ihn stabil an derselben Stelle hält. Um möglichst wenig Kontakt mit der Innenseite des Behälters im Bereich eines Heizelements zu haben, kann an dem Bodenteil ein Haltevorsprung für den Innenkörper vorgesehen sein. Dieser mindestens eine Haltevorsprung kann nach oben reichen, besonders vorteilhaft ausgebildet als eine Art Dorn. Er kann sich über mindestens die halbe Höhe des Behälters und/oder die halbe Höhe der Mantelwand des Behälters nach oben erstrecken. Alternativ kann der Haltevorsprung am Deckelteil angeordnet sein und nach unten bzw. auf das Bodenteil zu weisen. Er kann zylindrisch ausgebildet sein, alternativ zugespitzt. Der Innenkörper kann einerseits bei entsprechender Ausbildung aus entsprechendem Material durch zentriertes Aufstecken auf einen solchen Haltevorsprung gehalten werden, ohne dass weitere Hilfsmittel nötig sind. Alternativ kann noch zusätzlich eine Art Verschraubung, Verriegelung oder sonstige Fixierung vorgesehen sein. Bevorzugt wird in dem Innenkörper eine entsprechende Bohrung vorgesehen, die zu dem Haltevorsprung passt. Es können auch zwei solcher Haltevorsprünge vorgesehen sein, die dann automatisch eine Fixierung bewirken und ein Verdrehen des Innenkörpers verhindern.

Es wird als vorteilhaft angesehen, wenn der Innenkörper großteils gleichbleibenden Abstand zu der Innenseite des Behälters aufweist. Dies kann an mindestens 80 % seiner Außenfläche sein, die zu dem Heizelement hin weist bzw. einem Heizelement gegenüberliegt. Ein solcher Abstand kann im eingangs genannten Bereich liegen, also wenige Millimeter betragen.

Während der Innenkörper vorteilhaft einen Abstand zur Innenseite des Behälters aufweist, insbesondere umlaufend und somit überall, kann er einen unbeheizten Boden bzw. ein unbeheiztes Bodenteil des Behälters berühren. Hier kann er sogar aufliegen mit einem großen Teil seiner Unterseite, insbesondere vollflächig.

Eine Höhe des Innenkörpers in der Verdampfereinrichtung ist vorteilhaft so gewählt, dass er unterhalb des Dampfauslasses endet. Ein Abstand kann hier in vertikaler Richtung 5 mm bis 30 mm betragen. So kann Dampf ungehindert auch im Wasser oberhalb des Innenkörpers gebildet werden und zum Dampfauslass austreten. Der Innenkörper kann unterhalb einer Oberkante der Mantelwand des Behälters und/oder unterhalb des Heizelements oder eines obersten Bereichs des Heizelements enden. Hier kann ein Abstand in vertikaler Richtung maximal 30 mm betragen, vorteilhaft maximal 15 mm.

In einer Ausgestaltung der Erfindung kann der Innenkörper Stahlwolle aufweisen oder aus Stahlwolle bestehen. Hier kann besonders vorteilhaft Edelstahl verwendet werden, bevorzugt korrosionsbeständiger V2A- oder V4A-Edelstahl. Alternativ kann der Innenkörper schaumartiges oder schwammartiges Material aufweisen, das offenporig ausgebildet ist. Dies sollte temperaturbeständig sein bis 100 °C, so dass sich manche Kunststoffe, aber vor allem keramisches Material anbieten. Derartiges keramisches Material ist auch mechanisch stabil und auf Dauer beständig.

In nochmals weiterer Ausgestaltung der Erfindung ist es möglich, dass der Innenkörper ein Gewebe oder ein Geflecht oder ein Gewirke aus Fäden oder Fasern ist, insbesondere aus Metallfäden ist. Dieses kann dann an sich zwar ähnlich sein wie die vorgenannte Ausgestaltung mit Stahlwolle, der Innenkörper ist hier jedoch mit einem entsprechenden Verfahren regelmäßig und gezielt geformt.

In vorteilhafter Ausgestaltung der Erfindung ist mindestens ein Temperaturerfassungsmittel an einer Außenseite des Behälters vorgesehen. Damit können eine unzulässig hohe Temperatur oder ein unzulässig hoher Temperaturanstieg erkannt werden, um mögliche Gegenmaßnahmen zu ergreifen. Dies können diskrete Temperatursensoren sein, die sehr lokal eine Temperatur erfassen. Zusätzlich und/oder alternativ können auch flächige Temperaturerfassungsmittel vorgesehen sein, insbesondere entsprechend der vorgenannten EP 3088800 A1.

Ein Elektrogerät, das mit der erfindungsgemäßen Verdampfereinrichtung versehen ist, weist erfindungsgemäß einen Dampfbehandlungsraum auf. In diesen kann Dampf von der Verdampfereinrichtung eingeleitet werden, entweder gezielt durch ein Ventil oder direkt. Ein solches Elektrogerät ist bevorzugt ein Elektrogargerät, beispielsweise ein Dampfgarer bzw. Steamer zur Lebensmittelzubereitung. Dabei ist die Verdampfereinrichtung vorteilhaft innerhalb des Elektrogeräts angeordnet, besonders vorteilhaft mit senkrecht aufgestelltem Behälter, wie dies zuvor erläutert worden ist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine stark schematisierte Darstellung eines erfindungsgemäßen Dampfgargeräts mit einem erfindungsgemäßen Verdampfer samt Garkammer,
- Fig. 2: eine Darstellung von schräg oben auf einen erfindungsgemäßen Verdampfer,
- Fig. 3: einen Schnitt durch eine Schrägdarstellung des Verdampfers aus Fig. 2 und
- Fig. 4: eine Draufsicht auf die Schnittfläche der Schnittdarstellung gemäß Fig. 3.

### Detaillierte Beschreibung der Ausführungsbeispiele

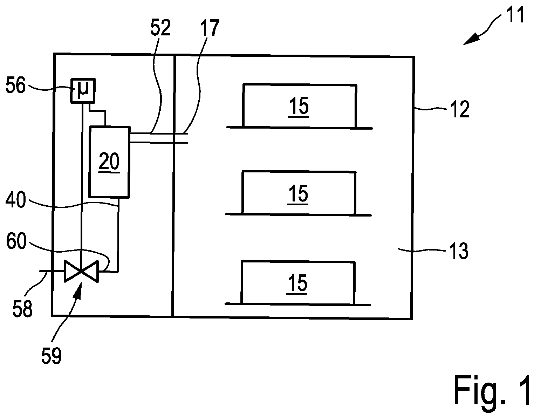

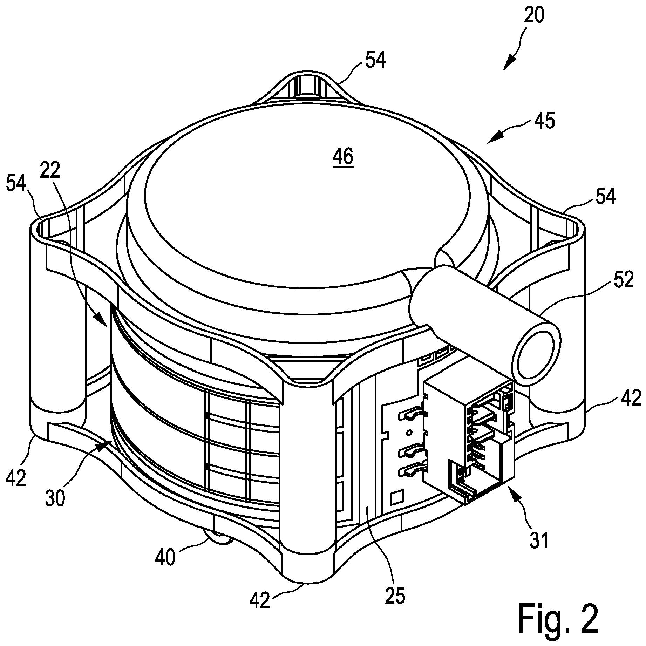

In der Fig. 1 ist sehr schematisch ein Dampfgargerät 11 dargestellt, auch Steamer genannt, mit einem Gehäuse 12, das vor allem eine Garkammer 13 enthält. In der Garkammer 13 ist mehrfach Gargut 15 enthalten, beispielsweise auf Schüben übereinander, um mittels Dampf und Wärme zubereitet zu werden. Ein Dampfeinlass 17 geht in die.Garkammer 13. Der Dampfeinlass 17 kommt von einem Verdampfer 20, der im Folgenden anhand der Fig. 2 bis 4 näher erläutert wird.

Das Dampfgargerät 11 weist eine Steuerung 56 auf, die mit einer nicht dargestellten Bedieneinheit bzw. Programmeinheit verbunden ist. Die Steuerung 56 steuert den Verdampfer 20 an, insbesondere dessen Heizleistung. Des Weiteren steuert sie ein Ventil 59 an, das an einen Wasseranschluss 58 des Dampfgargeräts 11 nach außen verbunden ist. Wasser kann durch das Ventil 59 gesteuert in die Zuleitung 60 gegeben werden, die zu dem Verdampfer 20 führt.

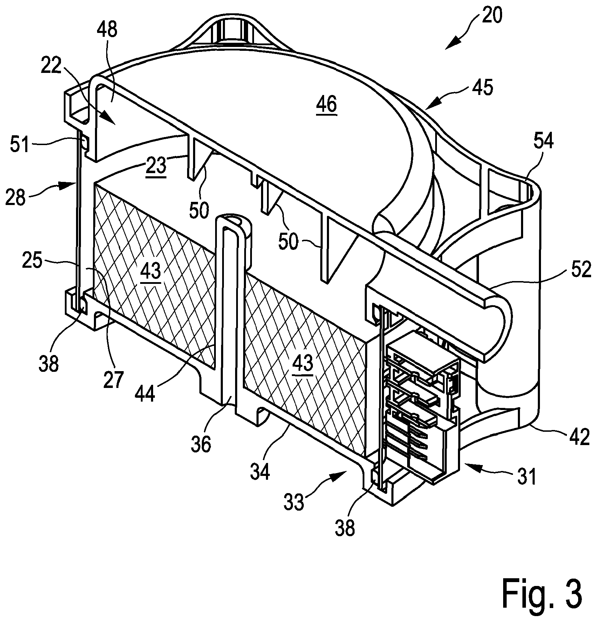

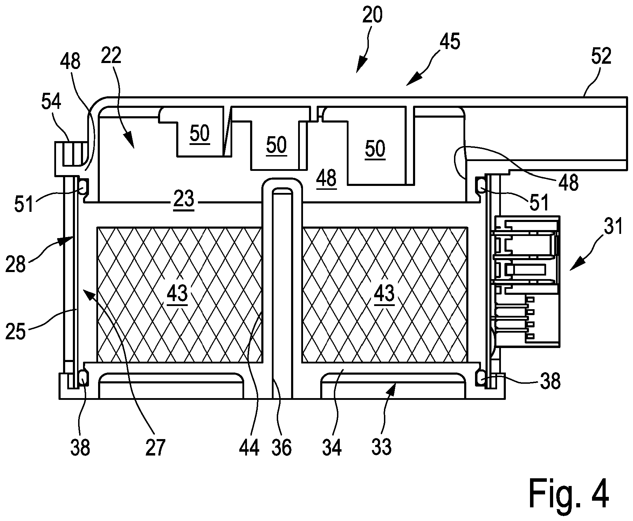

In der Fig. 2 ist in Schrägansicht ein erfindungsgemäßer Verdampfer 20 als vorbeschriebene Verdampfereinrichtung dargestellt, und zwar von schräg oben. Anhand der weiteren Fig. 3 und 4 wird der Verdampfer 20 näher erläutert.

Der Verdampfer 20 weist einen Behälter 22 auf, der einen Innenraum 23 aufweist bzw. definiert. In diesem Innenraum 23 ist, wie nachfolgend noch näher erläutert wird, im Betrieb des Verdampfers 20 Wasser, das erhitzt und verdampft wird. Der Behälter 22 wird im Wesentlichen von einer Mantelwand 25 gebildet, die rohrartig umläuft und aus Metall besteht. Der Behälter 22 ist also teilweise von einem Rohr gebildet. Sie weist eine Innenseite 27 und eine Außenseite 28 auf. Auf der Außenseite 28 ist ein Heizleiter 30 aufgebracht, hier in Dickschichttechnik, wie dies beispielsweise aus der vorgenannten EP 3088800 A1 bekannt ist. Als elektrischer Anschluss an den Verdampfer 20 ist ein Anschlussstecker 31 an der Außenseite 28 befestigt. Er kann mittels dargestellter Steckanschlussfahnen auch an nicht dargestellte Temperatursensoren geführt sein, was der Fachmann aber kennt. Der Anschlussstecker 31 ist allgemein vorteilhaft nahe am bzw. unter einem Dampfauslass 52 angeordnet, der von einem Deckelteil 45 zur Seite abgeht. Die Mantelwand 25 ist vorteilhaft als rundzylindrisches und in Umfangsrichtung geschlossenes Rohr ausgebildet mit planparallelen Enden als Oberkante oben und Unterkante unten.

Unten an der Mantelwand 25 ist ein Bodenteil 33 angeordnet, das eine im Wesentlichen ebene Bodenfläche 34 aufweist. In der Mitte der Bodenfläche ist ein nach oben ragender Haltevorsprung 36 vorgesehen, der sich über die Höhe der gesamten Mantelwand 25 erstreckt. Eine Abdichtung zwischen Bodenteil 33 und Mantelwand 25 erfolgt mittels eines Dichtrings 38, der im Bereich einer rinnenartigen Anformung des Bodenteils 33 angeordnet ist. Gemäß Fig. 2 geht auch ein Wassereinlass 40 in das Bodenteil 33, und zwar von unten in die Bodenfläche 34. So wird vermieden, dass die Mantelwand 25 ein Loch oder eine Durchbrechung aufweisen muss. Wasser kann dann von unten in den Verdampfer 20 bzw. in den Behälter 22 strömen, und zwar durch den Bodenteil 33 bzw. dessen Bodenfläche 34.

An vier gegenüberliegenden Stellen ragt von dem Bodenteil 33 jeweils ein Befestigungsabschnitt 42 nach außen. Dazu wird nachher noch mehr erläutert.

Auf der Bodenfläche 34 liegt ein erfindungsgemäßer Innenkörper 43 auf, der durch den Haltevorsprung 36 gehalten bzw. fixiert wird, vorteilhaft durch klemmende Wirkung. Der Innenkörper 43 weist hierfür eine entsprechende Innenbohrung 44 auf.

Wie vor allem der seitliche Schnitt der Fig. 4 zeigt, ist der rundzylindrische Innenkörper 43 samt Innenbohrung 44 so ausgebildet, dass sein Durchmesser etwas geringer ist als derjenige der Innenseite 27. Somit weist der Innenkörper 43 an seiner Außenseite stets einen Abstand zur Innenseite 27 der Mantelwand 25 auf. Dieser Abstand ist vorteilhaft konstant und liegt im Bereich der eingangs genannten wenigen Millimeter, hier beispielsweise 4 mm bis 7 mm. Dadurch, dass der Innenkörper 43 nicht an der Innenseite 27 anliegt, wird verhindert, dass es Stellen von zu stark variierender Temperatur aufgrund unterschiedlicher Wärmeabnahme gibt.

Der Innenkörper 43 besteht im hier vorliegenden Fall aus Stahlwolle und ist in Form gepresst, um die rundzylindrische Form zu erhalten. Andere Materialien bzw. andere Verarbeitungsformen sind durchaus denkbar, wie sie eingangs erläutert worden sind. Auf alle Fälle ist der Innenkörper 43 durchlässig für Wasser und wäre auch durchlässig für Dampf, wobei er vorteilhaft weitgehend oder vollständig mit Wasser bedeckt ist. Der Innenkörper 43 bildet einen schmalen Ringraum mit der Innenseite 27 der Mantelwand 25, und das relativ geringe Wasservolumen in diesem Ringraum kann von den Heizleitern 30 des Heizelements an der Außenseite 28 schnell entsprechend hochgeheizt werden, um zu kochen bzw. um zu verdampfen. Des Weiteren wird durch das wasserdurchlässige Material des Innenkörpers 43 zwar ein gewisser Wasseraustausch gewährleistet, gleichzeitig aber findet kein zu starker Wasseraustausch statt. Somit kann Wasser im mittleren bzw. zentralen Bereich des Innenraums 23 des Behälters 22 nicht so stark ausgetauscht werden mit demjenigen des Ringraums innen an der Innenseite 27 entlang. Des Weiteren kann das Entstehen von besonders großen Dampfblasen erschwert oder verhindert werden, die ebenfalls einen möglichst schnellen Wärmeeintrag in das Wasser zum Verdampfen behindern könnten.

Oben auf die Mantelwand 25 ist der Deckelteil 45 aufgesetzt. Der Deckelteil 45 ist, wie zu ersehen ist, relativ kompliziert ausgebildet und somit vorteilhaft als Kunststoffspritzgussteil hergestellt. Es weist eine mittige Deckelfläche 46 auf, die weitgehend flach sein kann. Die Deckelfläche 46 ist der obere Abschnitt eines Rohrabschnitts 48 des Deckelteils 45, der mit etwas geringerem Durchmesser als die Mantelwand 25 nach oben erstreckt ist. Der Rohrabschnitt 48 greift mit seinem unteren Rand in die Mantelwand 25 hinein, hier ist ein Dichtring 51 vorgesehen zur Abdichtung.

An der Unterseite der Deckelfläche 46 sind Ablenkplatten 50 angeformt. Die Ablenkplatten 50 erstrecken sich, wie aus der schrägen Schnittdarstellung der Fig. 3 zu ersehen ist, so, dass sie sozusagen im Weg der Längsmittelachse des Dampfauslasses 52 liegen. Somit kann mittels der Ablenkplatten 50 das Austreten von Wassertropfen zum Dampfauslass 52 reduziert werden bzw. verhindert werden, dass austretender Dampf zu viele von diesen Wassertröpfchen mitreißt. Die Ablenkplatten 50 werden in Richtung näher zum Dampfauslass 52 hin größer, da hier die Gefahr des Mitreißens von Wassertröpfchen ansteigt.

Am Deckelteil 45 sind vier entsprechende Befestigungsabschnitte 54 angeformt, die mit denjenigen Befestigungsabschnitten 42 des Bodenteils 33 zusammenpassen. Sie können entweder direkt ineinander verrastet werden, alternativ können sie zusätzlich noch verschraubt werden.

Aus der Schrägdarstellung der Fig. 2 ist erkennbar, dass der Verdampfer 20 relativ kompakt ist, insbesondere eine relativ geringe Höhe aufweist. Das Heizelement, das von den Heizleitern 30 gebildet wird, kann vorteilhaft ein sogenanntes Einkreis-Heizelement sein. Somit wird es vollständig bzw. mit allen seinen Heizleitern 30 eingeschaltet und ausgeschaltet.

Zusätzlich zu dem langen Haltevorsprung 36, der den gesamten Innenkörper 43 durchläuft, könnten auch noch ein oder zwei weitere Haltedorne odgl. an der Bodenfläche 34 angeordnet sein. Diese könnten zur Befestigung bzw. Fixierung des Innenkörpers 43 dienen, so dass sich dieser vor allem nicht verdrehen kann.

Ein Wasserstand von Wasser in dem Behälter 22 bzw. im Innenraum 23 sollte so sein, dass er nach Möglichkeit unterhalb des unteren Rands des Deckelteils 45 bzw. dessen Rohrabschnitts 48 steht. Darüber würde Wasser nämlich eigentlich nicht mehr an der Mantelwand 25 bzw. deren Innenseite 27 anliegen, und dann würde deren Beheizen von außen mit einem Heizleiter 30 auch keinen Sinn machen. Gleichzeitig ist es vorteilhaft, wenn der Innenkörper 43 vollständig von Wasser bedeckt ist, auch um die an der Innenseite benetzbare Fläche möglichst groß zu halten bzw. möglichst viel Fläche zum Beheizen zu haben.

## Patentansprüche

1. Verdampfereinrichtung (20) für Wasser, geeignet für ein Dampfgargerät, die Verdampfereinrichtung umfassend:
- einen Behälter (22), der geschlossen ist bis auf einen Wassereinlass (40) und einen Dampfauslass (52),
- mindestens ein Heizelement (30) außen am Behälter (22), wobei:
- innen im Behälter (22) ein Innenkörper (43) angeordnet ist,
- der Innenkörper (43) an mindestens 80 % seiner Außenfläche, die zu dem Heizelement (30) hin weist, von der Innenseite (27) des Behälters (22) beabstandet ist,
- der Innenkörper (43) für Dampf und Wasser durchlässig ist,
- der Innenkörper (43) aus einem porösen Material und/oder aus einem Gewebe-Material besteht,
**dadurch gekennzeichnet, dass**
- ein Deckelteil (45) des Behälters (22) aus Kunststoffteil ausgebildet ist und oben mit einer Mantelwand (25) des Behälters (22) verbunden ist,
- auf einer Innenseite des Deckelteils (45) Ablenkplatten (50) angeordnet sind, die in der projizierten Verlängerung des Dampfauslasses (52) in den Behälter (22) hinein angeordnet sind.

2. Verdampfereinrichtung nach Anspruch 1, wobei der Wassereinlass (40) im unteren Bereich des Behälters (22) vorgesehen ist, vorzugsweise in einem untersten Bereich, insbesondere an einem Behälterboden (33).

3. Verdampfereinrichtung nach Anspruch 1 oder 2, wobei der Behälter (22) ein Rohr ist, vorzugsweise ein rundzylindrisches Rohr, wobei insbesondere der Behälter (22) mit einer Rohrachse senkrecht stehend angeordnet ist.

4. Verdampfereinrichtung nach einem der vorhergehenden Ansprüche, wobei die umlaufende Mantelwand (25) des Behälters (22) aus Metall besteht, insbesondere aus Dickschichtstahl, wobei vorzugsweise ein Bodenteil (33) des Behälters (22) aus Kunststoff ausgebildet ist und dichtend mit der Mantelwand (25) verbunden ist, wobei insbesondere der Wassereinlass (40) im Bodenteil (33) angeordnet ist.

5. Verdampfereinrichtung nach Anspruch 3 wobei der Dampfauslass (52) an dem Deckelteil (45) angeordnet ist und mit einem Winkel zwischen 70° und 90° von der Längsmittelachse des Behälters (22) von dem Deckelteil (45) abgeht, wobei sich insbesondere der Deckelteil (45) in einem unteren Rohrabschnitt in Längsrichtung des Rohrs erstreckt, vorzugsweise über 5 mm bis 30 mm über einen oberen Rand des Rohrs hinaus erstreckt, wobei in diesem Rohrabschnitt der Dampfauslass (52) seitlich von dem Deckelteil (45) abgeht.

6. Verdampfereinrichtung nach Anspruch 4 und 5, wobei mindestens ein Befestigungsabschnitt (54, 42) von dem Deckelteil (45) und von dem Bodenteil (33) abstehen, insbesondere in Richtung senkrecht zur Längsachse des Behälters (22), die miteinander verbunden werden mit Kraftrichtung aufeinander zu.

7. Verdampfereinrichtung nach einem der vorhergehenden Ansprüche, wobei die Ablenkplatten (50) einen Abstand von mindestens 5 mm zu dem Dampfauslass (52) haben und insbesondere in der projizierten Verlängerung voneinander beabstandet sind.

8. Verdampfereinrichtung nach einem der vorhergehenden Ansprüche, wobei von dem Bodenteil (33) ein Haltevorsprung (36) nach oben reicht, insbesondere über mindestens die halbe Höhe des Behälters (22) und/oder der Mantelwand (25) des Behälters, wobei vorzugsweise der Haltevorsprung (36) nach oben ragt und zylindrisch ausgebildet ist.

9. Verdampfereinrichtung nach einem der vorhergehenden Ansprüche, wobei der Innenkörper (43) an mindestens 80 % seiner zu dem Heizelement (30) hinweisenden Außenfläche einen gleichbleibenden Abstand zu der Innenseite (27) des Behälters (22) aufweist, wobei vorzugsweise dieser Abstand zwischen 2 mm und 10 mm liegt, wobei insbesondere der Innenkörper (43) umlaufend von der Innenseite (27) des Behälters (22) beabstandet ist.

10. Verdampfereinrichtung nach einem der vorhergehenden Ansprüche, wobei der Innenkörper (43) weitgehend, insbesondere vollflächig, auf einem Boden (33) des Behälters (22) aufliegt.

11. Verdampfereinrichtung nach einem der vorhergehenden Ansprüche, wobei der Innenkörper (43) unterhalb des Dampfauslasses (52) endet, vorzugsweise unterhalb einer Oberkante der Mantelwand (25) des Behälters (22), vorzugsweise mindestens 5 mm bis 30 mm unterhalb davon.

12. Verdampfereinrichtung nach einem der vorhergehenden Ansprüche, wobei der Innenkörper (43) Stahlwolle aufweist oder aus Stahlwolle besteht, insbesondere aus korrosionsbeständigem V2A- oder V4A-Edelstahl.

13. Verdampfereinrichtung nach einem der Ansprüche 1 bis 11, wobei der Innenkörper (43) schaumartiges oder schwammartiges Material aufweist, das offenporig ausgebildet ist, wobei insbesondere der Innenkörper aus keramischem Material besteht.

14. Verdampfereinrichtung nach einem der Ansprüche 1 bis 11, wobei der Innenkörper (43) ein Gewebe oder ein Geflecht oder ein Gewirke aus Metallfäden ist.

15. Elektrogerät (11) mit einer darin oder daran angeordneten Verdampfereinrichtung (20) nach einem der vorhergehenden Ansprüche, wobei das Elektrogerät (11) einen Dampfbehandlungsraum (13) aufweist, in den Dampf von der Verdampfereinrichtung (20) einleitbar ist, wobei vorzugsweise das Elektrogerät ein Elektrogargerät ist, insbesondere ein Steamer (11) zur Lebensmittelzubereitung.

## Claims

1. Evaporator device (20) for water, suitable for a steam cooker, the evaporator device comprising:
- a container (22) which is closed apart from a water inlet (40) and a steam outlet (52),
- at least one heating element (30) on the outside of the container (22),
wherein:
- an inner body (43) is arranged inside the container (22),
- the inner body (43) is, on at least 80% of its outer surface, which faces toward the heating element (30), spaced apart from the inner side (27) of the container (22),
- the inner body (43) is permeable to steam and water,
- the inner body (43) consists of a porous material and/or of a fabric material, **characterized in that**
- a cover part (45) of the container (22) is formed from plastic and is connected at the top to a casing wall (25) of the container (22),
- arranged on an inner side of the cover part (45) are deflection plates (50), which are arranged in the projected extension of the steam outlet (52) into the container (22).

2. Evaporator device according to claim 1, wherein the water inlet (40) is provided in a lower region of the container (22), preferably in a bottommost region, in particular on a container base (33).

3. Evaporator device according to claim 1 or 2, wherein the container (22) is a tube, preferably a circular cylindrical tube, wherein in particular the container (22) is arranged with a tube axis standing vertically.

4. Evaporator device according to any of the preceding claims, wherein the circumferential casing wall (25) of the container (22) consists of metal, in particular of thick-film steel, wherein preferably a base part (33) of the container (22) is formed from plastic and is sealingly connected to the casing wall (25), wherein in particular the water inlet (40) is arranged in the base part (33).

5. Evaporator device according to claim 3, wherein the steam outlet (52) is arranged on the cover part (45) and projects from the cover part (45) at an angle of between 70° and 90° from the longitudinal central axis of the container (22), wherein in particular the cover part (45) extends in a lower tube portion in the longitudinal direction of the tube, preferably 5 mm to 30 mm above the upper boundary of the tube, wherein in said tube portion the steam outlet (52) projects laterally from the cover part (45).

6. Evaporator device according to claim 4 and 5, wherein at least one fastening portion (54, 42) projects from the cover part (45) and from the base part (33), in particular in a direction perpendicular to the longitudinal axis of the container (22), which fastening portions are connected to one another with the direction of force toward one another.

7. Evaporator device according to any of the preceding claims, wherein the deflection plates (50) are at a distance of at least 5 mm from the steam outlet (52), and in particular are spaced apart from one another in the projected extension.

8. Evaporator device according to any of the preceding claims, wherein, from the base part (33), a retaining projection (36) reaches upwards, in particular over at least half the height of the container (22) and/or of the casing wall (25) of the container (22), wherein preferably the retaining projection (36) extends upwards and is cylindrical.

9. Evaporator device according to any of the preceding claims, wherein the inner body (43) is, on at least 80% of its outer surface, which faces toward the heating element (30), at a constant distance from the inner side (27) of the container (22), wherein preferably said distance is between 2 mm and 10 mm, wherein in particular the inner body (43) is circumferentially spaced apart from the inner side (27) of the container (22).

10. Evaporator device according to any of the preceding claims, wherein the inner body (43) largely, in particular completely, bears on a base (33) of the container (22).

11. Evaporator device according to any of the preceding claims, wherein the inner body (43) ends beneath the steam outlet (52), preferably beneath a top edge of the casing wall (25) of the container (22), preferably at least 5 mm to 30 mm beneath it.

12. Evaporator device according to any of the preceding claims, wherein the inner body (43) contains steel wool or consists of steel wool, in particular corrosion-resistant V2A or V4A high-grade steel.

13. Evaporator device according to any of claims 1 to 11, wherein the inner body (43) contains foam-like or sponge-like material which is of open-pore form, wherein in particular the inner body is made of ceramic material.

14. Evaporator device according to any of claims 1 to 11, wherein the inner body (43) is a fabric or a mesh or a knit composed of metal threads.

15. Electrical appliance (11) having an evaporator device (20) according to any of the preceding claims arranged therein or thereon, wherein the electrical appliance (11) has a steam treatment space (13) into which steam is able to be introduced from the evaporator device (20), wherein preferably the electrical appliance is an electrical cooking appliance, in particular a steamer (11) for food preparation.

## Revendications

1. Dispositif évaporateur (20) pour de l'eau, approprié à un cuiseur vapeur, le dispositif évaporateur comprenant :
- un réservoir (22) fermé à l'exception d'une entrée d'eau (40) et d'une sortie de vapeur (52),
- au moins un élément de chauffage (30) à l'extérieur du réservoir (22),
dans lequel :
- à l'intérieur du réservoir (22) un corps intérieur (43) est disposé,
- le corps intérieur (43) est espacé du côté intérieur (27) du réservoir (22) sur au moins 80 % de sa surface extérieure orientée vers l'élément de chauffage (30),
- le corps intérieur (43) est perméable pour vapeur et de l'eau,
- le corps intérieur (43) est composé d'un matériau poreux et/ou d'un matériau tissulaire,
**caractérisé en ce que**
- une partie couvercle (45) du réservoir (22) est sous forme de partie en matière plastique et en dessus est reliée à une paroi enveloppe (25) du réservoir (22),
- sur un côté intérieur de la partie couvercle (45) des plaques de déviation (50) sont disposées, lesdites plaques étant disposées dans le prolongement projeté de la sortie de vapeur (52) vers l'intérieur du réservoir (22).

2. Dispositif évaporateur selon la revendication 1, dans lequel l'entrée d'eau (40) est prévue dans une zone inférieure du réservoir (22), de préférence dans une zone la plus inférieure, en particulier sur un fond du réservoir (22).

3. Dispositif évaporateur selon la revendication 1 ou 2, dans lequel le réservoir (22) est un tube, de préférence un tube cylindrique circulaire, dans lequel en particulier le réservoir (22) est arrangé avec un axe du tube debout à la verticale.

4. Dispositif évaporateur selon l'une quelconque des revendications précédentes, dans lequel la paroi enveloppe (25) circonférentielle du réservoir (22) est en métal, en particulier en acier à film épais, dans lequel de préférence une partie de base (33) du réservoir (22) est formée en matière plastique et jointe de manière étanche à la paroi enveloppe (25), dans lequel en particulier l'entrée d'eau (40) est disposée dans la partie de base (33).

5. Dispositif évaporateur selon la revendication 3, dans lequel la sortie de vapeur (52) est disposée sur la partie couvercle (45) et débouche de la partie couvercle (45) sous an angle comprise entre 70° et 90° de l'axe longitudinal central du réservoir (22), dans lequel en particulier la partie couvercle (45) s'étend dans une section tubulaire inférieure dans la direction longitudinale du tube, de préférence sur 5 mm à 30 mm au-delà d'un bord supérieur du tube, dans lequel dans cette section tubulaire la sortie de vapeur (52) débouche à côté de la partie couvercle (45).

6. Dispositif évaporateur selon la revendication 4 et 5, dans lequel au moins une section de fixation (54, 42) fait saillie de la partie couvercle (45) et de la partie de base (33), en particulier dans la direction perpendiculaire à l'axe longitudinal du réservoir (22), lesdites sections de fixation interconnectées avec une direction de la force l'une vers l'autre.

7. Dispositif évaporateur selon l'une quelconque des revendications précédentes, dans lequel les plaques de déviation (50) présentent une distance d'au moins 5 mm de la sortie de vapeur (52), et en particulier sont espacées l'une de l'autre dans le prolongement projeté.

8. Dispositif évaporateur selon l'une quelconque des revendications précédentes, dans lequel un épaulement de maintien (36) s'étend de la partie de base (33) vers le haut, en particulier sur au moins la moitié de la hauteur du réservoir (22) et/ou de la paroi enveloppe (25) du réservoir, dans lequel de préférence l'épaulement de maintien (36) monte vers le haut et est sous forme cylindrique.

9. Dispositif évaporateur selon l'une quelconque des revendications précédentes, dans lequel le corps intérieur (43), sur au moins 80 % de sa surface extérieure orientée vers l'élément de chauffage (30), présente une distance constante du côté intérieur (27) du réservoir (22), dans lequel de préférence cette distance est comprise entre 2 mm et 10 mm, dans lequel en particulier le corps intérieur (43) est espacé sur la périphérie du côté intérieur (27) du réservoir (22).

10. Dispositif évaporateur selon l'une quelconque des revendications précédentes, dans lequel le corps intérieur (43) reste largement, en particulier à pleine surface, sur une base (33) du réservoir (22).

11. Dispositif évaporateur selon l'une quelconque des revendications précédentes, dans lequel le corps intérieur (43) se termine en dessous de la sortie de vapeur (52), de préférence en dessous d'un bord supérieur de la paroi enveloppe (25) du réservoir (22), de préférence au moins 5 mm à 30 mm en dessous du bord.

12. Dispositif évaporateur selon l'une quelconque des revendications précédentes, dans lequel le corps intérieur (43) présente laine d'acier ou se compose de laine d'acier, en particulier en acier anticorrosion V2A ou V4A.

13. Dispositif évaporateur selon l'une quelconque des revendications 1 à 11, dans lequel le corps intérieur (43) présente matériau de type mousse ou de type spongieux sous forme poreuse, dans lequel en particulier le corps intérieur se compose de matériau céramique.

14. Dispositif évaporateur selon l'une quelconque des revendications 1 à 11, dans lequel le corps intérieur (43) est un tissu ou une tresse ou un tricot de fils métalliques.

15. Appareil électrique (11) avec un dispositif évaporateur (20) selon l'une quelconque des revendications précédentes disposé dans ou sur ledit appareil, dans lequel l'appareil électrique (11) présente une cavité de traitement à la vapeur (13) où vapeur du dispositif évaporateur (20) peut être introduite, dans lequel de préférence l'appareil électrique est un appareil de cuisson électrique, en particulier un four vapeur (11) pour la préparation de produits alimentaires.
